# EUROPÄISCHE PATENTSCHRIFT

(11) **EP 3 963 204 B1**
(45) Veröffentlichungstag und Bekanntmachung des Hinweises auf die Patenterteilung: **27.08.2025**
(21) Anmeldenummer: 20723827.0
(22) Anmeldetag: 30.04.2020
(51) Int. Cl.: F03D 1/02, F03D 9/25, F03D 1/04, F03D 1/06, F03D 7/02

(54) **ROTOR FÜR EINE WINDENERGIEANLAGE UND WINDENERGIEANLAGE**
ROTOR FOR A WIND TURBINE AND WIND TURBINE
ROTOR POUR UNE ÉOLIENNE ET ÉOLIENNE

(30) Priorität: 30.04.2019 DE 102019111123
(43) Veröffentlichungstag der Anmeldung: 09.03.2022
(73) Patentinhaber: Wobben Properties GmbH, 26607 Aurich (DE)
(72) Erfinder: STEMBERG, Jochen, 26607 Aurich (DE); MAASS, Hauke, 8000 Aarhus (DK)
(74) Vertreter: Eisenführ Speiser
(86) Internationale Anmeldenummer: PCT/EP2020/062027
(87) Internationale Veröffentlichungsnummer: WO 2020/221860

(56) Entgegenhaltungen:
- WO-A1-2007/057021
- DE-A1- 102015 113 404
- US-A1- 2011 206 509
- US-A1- 2014 234 097
- US-A1- 2016 237 987
- US-A1- 2018 372 069
- US-B1- 7 074 011

## Beschreibung

Die Erfindung betrifft einen Rotor für eine Windenergieanlage, insbesondere eine Windenergieanlage mit einer Leistung von mehr als 1 MW gemäß dem Oberbegriff von Anspruch 1, eine Nabe für einen Rotor einer Windenergieanlage und eine Windenergieanlage.

Windenergieanlagen sind grundsätzlich bekannt. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst in der Regel ein, zwei oder mehrere gleich lange Rotorblätter. Die Rotorblätter sind schlanke, gleich lange Bauteile, die häufig aus faserverstärktem Kunststoff hergestellt sind.

Bei der Konstruktion von Rotorblättern für Windenergieanlagen muss unter anderem ein Kompromiss zwischen einem möglichst großen Auftrieb des Rotorblattes, dessen Luftwiderstand und der Stabilität des Rotorblattes gefunden werden. Grundsätzlich ist bekannt, dass ein Profil eines Rotorblattes, das bei niedrigen Windgeschwindigkeiten einen hohen Auftrieb erzeugt, in der Regel einen hohen Luftwiderstand bei höheren Windgeschwindigkeiten aufweist. Außerdem muss bei der Konstruktion neben den aerodynamischen Eigenschaften des Rotorblattes zusätzlich sichergestellt werden, dass das Rotorblatt einem Winddruck standhält, der beispielsweise bei Sturm auftritt. Diese Anforderungen sind in der Regel als strukturelle Anforderungen definiert. Derartige Anforderungen sind in der Regel mit schlanken Rotorblättern mit dicker Profilierung einfacher zu erfüllen als mit Rotorblättern mit dünnen Profilen, denn mit einem dicken Profil ist eine vorgegebene Stabilität mit geringerem Materialaufwand zu erzielen als mit einem dünnen Profil.

Die Rotorblätter eines Rotors einer Horizontalachsen-Windenergieanlagen werden in der Regel so ausgelegt, dass sie die Geschwindigkeit in der Stromröhre um 1/3 der Ursprungswindgeschwindigkeit reduzieren, was auch als Betz'sches Optimum bezeichnet wird. Diese Reduktion wird durch eine Induktion des Rotors entgegen der Anströmrichtung erreicht. Der optimale Rotor setzt demnach der anströmenden Luft einen Widerstand entgegen, der genau so groß ist, dass die Anströmgeschwindigkeit auf der gesamten Rotordrehebene um 1/3 reduziert wird. Dies wird auch als Induktionsfaktor bezeichnet. Der Induktionsfaktor ist an jeder Stelle eines Rotorblattes abhängig von der lokalen Umfangsgeschwindigkeit, dem lokalen Auftriebsbeiwert sowie der Rotorblatttiefe. Die derart dem Wind entnommene Energie wird in Elektrizität umgewandelt.

Ein Rotor wird in der Regel auf eine bestimmte Rotationsgeschwindigkeit bzw. ein bestimmtes Verhältnis von Blattspitzengeschwindigkeit zu Anströmgeschwindigkeit, der sogenannten Schnelllaufzahl, ausgelegt. Die Auftriebsbeiwerte und die Rotorblatttiefe werden dann so gewählt, dass sich über den gesamten Rotorradius ein Induktionsfaktor von möglichst 1/3 einstellt. In der Praxis hat sich jedoch gezeigt, dass sich insbesondere in nabennahen Abschnitten des Rotorblattes kein Induktionsfaktor von 1/3 realisieren lässt, sondern dieser meist geringere Werte annimmt. Dies resultiert in einer geringeren Leistung der Windenergieanlage im Teillastbereich.

Die EP 1 255 931 B1 beschreibt eine Windenergieanlage mit zwei hintereinander angeordneten Rotoren, wobei ein Rotor einen ersten Durchmesser und ein weiterer Rotor einen zweiten Durchmesser aufweist. Die Drehgeschwindigkeiten der zwei Rotoren sind derart auslegt, dass die Blattspitzen der Rotorblätter dieser Rotoren die gleichen Umfangsgeschwindigkeiten aufweisen. Um dies zu erreichen ist die Drehzahl der zwei Rotoren unterschiedlich.

Das Deutsche Patent- und Markenamt hat in der Prioritätsanmeldung zu vorliegender Anmeldung folgenden Stand der Technik recherchiert: DE 10 2009 038 076 A1, DE 10 2015 113 404 A1, DE 10 2017 117 843 A1, US 2012/0051916 A1, US 2016/0237987 A1 und WO 2007/057021 A1.

US 2011/206509 A1 offenbart einen Rotor mit Rotorblättern, wobei jedem Rotorblatt ein Profilkörper zugeordnet ist. Der Profilkörper weist einen Wurzelabschnitt auf, der mittels eines Kopplungssystems an der Nabe des Rotors für die Rotorblätter befestigt ist. Mittels der Profilkörper soll eine zusätzliche Auftriebswirkung am Rotorblatt erzielt werden.

Hiervon ausgehend ist es eine Aufgabe der vorliegenden Erfindung, einen Rotor für eine Windenergieanlage, insbesondere eine Windenergieanlage mit einer Leistung von mehr als 1 MW, eine Nabe für einen Rotor einer Windenergieanlage und eine Windenergieanlage bereitzustellen, die einen oder mehrere der genannten Nachteile vermindern oder beseitigen. Insbesondere ist es eine Aufgabe der Erfindung, eine Lösung bereitzustellen, die den Ertrag von Windenergieanlagen im Teillastbereich steigert.

Gemäß einem ersten Aspekt wird diese Aufgabe gelöst durch einen Rotor für eine Windenergieanlage, insbesondere eine Windenergieanlage mit einer Leistung von mehr als 1 MW, gemäß den Merkmalen von Anspruch 1.

Das Primärrotorblatt erstreckt sich von dem ersten Wurzelbereich hin zur ersten Blattspitze. Die Länge des Primärrotorblatts zwischen dem Wurzelbereich und der ersten Blattspitze ist insbesondere die Längserstreckung, welche bei modernen Rotoren für Windenergieanlagen mehr als 50 m betragen kann. Der Wurzelbereich ist insbesondere der Bereich des Primärrotorblatts, mit dem dieses an einer Nabe angeordnet wird. Die Blattspitze ist der Bereich des Primärrotorblatts, der der Nabe abgewandt ist.

Neben dem Primärrotorblatt umfasst der Rotor das Sekundärrotorblatt. Das Sekundärrotorblatt unterscheidet sich von dem Primärrotorblatt insbesondere dadurch, dass dieses eine geringere Längserstreckung aufweist. Die Länge des Sekundärrotorblatts ist also geringer als die Länge des Primärrotorblatts. Im Betrieb ist der Unterschied auch daran zu erkennen, dass das sich drehende Primärrotorblatt eine Kreisfläche überstreicht, die einen größeren Durchmesser aufweist als die Kreisfläche, die von dem Sekundärrotorblatt überstrichen wird.

Dem im Vorherigen beschriebenen Rotor liegt die Erkenntnis zugrunde, dass der nicht optimale, von 1/3 abweichende Induktionsfaktor im nabennahen Bereich von Rotorblättern die Leistung der Windenergieanlage reduziert, insbesondere im Teillastbereich. Es wurde ferner erkannt, dass die erforderliche Rotorblatttiefe von den möglichen Auftriebsbeiwerten der verwendeten Profilschnitte abhängig ist. Diese Auftriebsbeiwerte können nicht beliebig hoch sein, sondern sind durch aerodynamische, physikalische Grenzen limitiert. Daraus folgt, dass ein optimales Rotorblatt nicht beliebig schlank ausgestaltet werden kann, sondern zur Erreichung des optimalen Induktionsfaktors bei gegebener Rotordrehzahl und gegebenem maximalen Auftriebsbeiwert eine bestimmte Mindestblatttiefe erforderlich ist.

Im nabennahen Bereich des Rotorblatts besteht das Problem, dass die Umfangsgeschwindigkeit kleiner wird und theoretisch an der Nabe gegen null geht. Zur Erreichung eines optimalen Induktionsfaktors bei limitierten Auftriebsbeiwerten müssten die Rotorblätter im nabennahen Bereich unendlich tief ausgestaltet werden. Dies ist aus konstruktiver Sicht jedoch nicht möglich. Außerdem müssen die Profile an der Blattwurzel hohe Biegemomente aufnehmen und daher strukturbedingt dick ausgestaltet sein, woraus wiederum folgt, dass die erreichbaren Auftriebsbeiwerte weiter reduziert sind. Darüber hinaus ist eine Begrenzung der maximalen Blatttiefe, die meist im Bereich zwischen 4 m und 5 m liegt, aus logistischen Gründen erforderlich, um zu gewährleisten, dass die Rotorblätter auf der Straße transportiert werden können.

Der Wurzelbereich von Rotorblättern hat an Pitch-geregelten Windenergieanlagen in der Regel ein Kreisprofil, um das Rotorblatt entsprechend an der Anlage lagern und drehen zu können, insbesondere an einer Nabe. Ein derartiges Kreisprofil hat einen Auftriebsbeiwert von null, sodass lediglich ein vom Optimum abweichender Induktionsfaktor möglich ist. Pitch-geregelte Windenergieanlagen weisen demnach konstruktionsbedingt einen vom Optimum abweichenden Induktionsfaktor im nabennahen Rotorblattbereich auf, sodass die Leistung weiter reduziert ist.

Der Erfindung liegt ferner die Erkenntnis zugrunde, dass eine weitere aerodynamische Optimierung konventioneller Rotorblätter nicht erfolgversprechend ist. Entsprechend dieser Erkenntnis wird vorgesehen, dass im nabennahen Bereich des Rotors ein kleineres Sekundärrotorblatt vorgesehen wird. Dieses Sekundärrotorblatt ist ein zusätzliches Rotorblatt, das neben dem Primärrotorblatt vorzugsweise an einer Nabe angeordnet ist und den Induktionsfaktor des Rotors im nabennahen Bereich erhöht.

Vorzugsweise richtet sich die zweite Längserstreckung des Sekundärrotorblatts nach der Länge des Bereiches am Primärrotorblatt, in dem der optimale Induktionsfaktor nicht erreicht wird. Vorzugsweise erstreckt sich das Sekundärrotorblatt mit einer derartigen zweiten Längserstreckung, dass dieses den Bereich des Rotors abdeckt, welcher aufgrund des Primärrotorblatts keinen optimalen Induktionsfaktor von 1/3 aufweisen würde.

Ein Vorteil dieser Lösung liegt darin, dass der zweite Wurzelbereich bedingt durch die geringere zweite Längserstreckung nur geringen Biegemomenten ausgesetzt ist und entsprechend mit geringer relativer Profildicke ausgestaltet werden kann. Dadurch können am Sekundärrotorblatt höhere Gleitleistungen erzielt werden als mit den dicken Profilen am Primärrotorblatt. Dadurch wird erreicht, dass das Sekundärrotorblatt im Teillastbereich, in dem die Anlage mit der Auslegungsschnelllaufzahl betrieben wird, leistungsoptimal betrieben werden kann. Der Induktionsfaktor von 1/3 wird demnach im Wesentlichen bis zur Nabe erreicht.

Der gemäß dem ersten Aspekt beschriebene Rotor bietet insbesondere für Schwachwindanlagen einen besonderen Vorteil, da hier die Strukturauslegung der Primärrotorblätter Bedeutung hat und die Sturmlasten für die Anlagenauslegung weniger kritisch sind.

In einer bevorzugten Ausführungsvariante des Rotors ist vorgesehen, dass das Verhältnis aus zweiter Längserstreckung zu erster Längserstreckung kleiner 0,75, kleiner 0,5, kleiner 0,3, oder kleiner 0,1 beträgt. Das Sekundärrotorblatt kann beispielsweise weniger als halb so lang wie das Primärrotorblatt sein und somit weniger als 50 % der Länge des Primärrotorblatts aufweisen. Darüber hinaus kann es bevorzugt sein, dass das Sekundärrotorblatt weniger als 30 % der Länge des Primärrotorblatts aufweist. Insbesondere ist es bevorzugt, dass das Sekundärrotorblatt eine Länge von kleiner gleich 20 Metern aufweist. Infolgedessen können Sondertransporte vermieden werden und die Kosten sowie der organisatorische Aufwand wird im Vergleich zu konventionellen Rotoren nicht wesentlich beeinflusst.

Gemäß einer weiteren bevorzugten Ausführungsvariante des Rotors ist vorgesehen, dass das Primärrotorblatt eine Pitchverstellung zur rotatorischen Bewegung um eine Längsachse des Primärrotorblatts aufweist. Darüber hinaus ist es bevorzugt, dass das Sekundärrotorblatt Stall-geregelt ausgebildet ist. Die Stall-geregelten Sekundärrotorblätter sind vorzugsweise fest an einer Nabe befestigt.

Ein derartiger Rotor mit Pitch-geregeltem Primärrotorblatt und Stall-geregeltem Sekundärrotorblatt stellt eine Hybridvariante zwischen Stall-geregelter und Pitch-geregelter Windenergieanlage dar. Ferner kann auch das Sekundärrotorblatt Pitch-geregelt sein und eine Pitchverstellung aufweisen. Wenn die Nennleistung der Windenergieanlage mit diesem Rotor erreicht wird und die Rotordrehzahl nicht weiter gesteigert werden kann, wird das Primärrotorblatt mittels der Pitchverstellung mit kleineren Schnelllaufzahlen betrieben, was dazu führt, dass am Sekundärrotorblatt eine Strömungsablösung einsetzen kann. Der Induktionsfaktor und das vom Sekundärrotorblatt erzeugte Drehmoment fallen dadurch in der Regel ab und der Rotorwirkungsgrad wird im Allgemeinen reduziert.

Dies ist bei Starkwind ein erwünschter Effekt, damit ein ungewollter Leistungsüberschuss am Rotor vermieden werden kann. Dies erleichtert den Betrieb einer solchen Anlage in der Sturmregelung. Da das Sekundärrotorblatt aufgrund seiner geringen zweiten Längserstreckung nur bei kleinen Umfangsgeschwindigkeiten betrieben wird, stellt eine Strömungsablösung an diesem Sekundärrotorblatt weder akustisch noch aeroelastisch ein signifikantes Problem dar.

Gemäß einer weiteren bevorzugten Fortbildung des Rotors ist vorgesehen, dass das Primärrotorblatt und das Sekundärrotorblatt an einer Nabe angeordnet sind. Das Primärrotorblatt und das Sekundärrotorblatt sind insbesondere an einer gemeinsamen Nabe angeordnet.

Die Nabe weist vorzugsweise eine Primäranschlussstelle und eine Sekundäranschlussstelle auf. Das Primärrotorblatt ist vorzugsweise an der Primäranschlussstelle angeordnet. Das Sekundärrotorblatt ist vorzugsweise an der Sekundäranschlussstelle angeordnet. Die Primäranschlussstelle ist vorzugsweise derart ausgebildet, dass an dieser eine drehbare Anordnung des Primärrotorblatts möglich ist. Beispielsweise kann die Primäranschlussstelle einen kreisrunden Flansch aufweisen, an dem ein Lager angeordnet wird, wobei das Primärrotorblatt mit diesem Lager rotatorisch an der Primäranschlussstelle angeordnet wird.

Darüber hinaus ist die Nabe vorzugsweise derart ausgebildet, dass an dieser Pitchantriebe anordenbar oder angeordnet sind, sodass das Primärrotorblatt mittels der Pitchantriebe um seine Längsachse rotatorisch bewegt werden kann. Die Sekundäranschlussstelle ist vorzugsweise derart ausgebildet, dass das Sekundärrotorblatt an dieser fest angeordnet werden kann.

Das Primärrotorblatt und das Sekundärrotorblatt sind vorzugsweise hinsichtlich einer Rotordrehachse im Wesentlichen an der gleichen axialen Position angeordnet. Insbesondere sind das Primärrotorblatt und das Sekundärrotorblatt hinsichtlich der Rotordrehachse im Wesentlichen nicht versetzt zueinander angeordnet.

Gemäß einer weiteren bevorzugten Fortbildung des Rotors ist vorgesehen, dass das Primärrotorblatt eine zwischen dem ersten Wurzelbereich und der ersten Blattspitze ausgerichtete erste Längsachse, und das Sekundärrotorblatt eine zwischen dem zweiten Wurzelbereich und der zweiten Blattspitze ausgerichtete zweite Längsachse aufweist, und die erste Längsachse und die zweite Längsachse einen Winkel parallel zur Drehrichtung einschließen.

Dadurch, dass die Längsachsen des Primärrotorblatts und des Sekundärrotorblatts einen Winkel parallel zur Drehrichtung einschließen, sind die Längsachsen des Primärrotorblatts und des Sekundärrotorblatts nicht parallel. Vorzugsweise ist zwischen der Längsachse des Primärrotorblatts und der Längsachse des Sekundärrotorblatts ein Winkel von ≤ 90°, insbesondere von ≤ 60°. Die Drehrichtung ist als Umfangsrichtung der Blattspitzen und/oder der kreisförmigen Fläche zu verstehen, die das Primärrotorblatt und/oder das Sekundärrotorblatt während des Betriebes überstreichen.

Darüber hinaus kann es bevorzugt sein, dass der Rotor eine Drehachse aufweist und die erste Längsachse und die zweite Längsachse mit der Drehachse im Wesentlichen einen gleich großen Winkel einschließen.

Vorzugsweise weist der Rotor die Drehachse auf. Die Längsachsen des Primärrotorblatts und des Sekundärrotorblatts schließen mit der Drehachse vorzugsweise im Wesentlichen einen gleich großen Winkel ein. Dies bedeutet insbesondere, dass die überstrichene Fläche während des Betriebes durch das Primärrotorblatt im Wesentlichen die im Betrieb überstrichene Fläche des Sekundärrotorblatts umfasst.

Gemäß einer weiteren bevorzugten Ausführungsvariante des Rotors ist vorgesehen, dass das Primärrotorblatt angrenzend an den ersten Wurzelbereich einen Strukturabschnitt umfasst, der sich ausgehend vom ersten Wurzelbereich mit einer Strukturabschnittslänge in Richtung der ersten Blattspitze erstreckt, und der Strukturabschnitt einen Induktionsfaktor von kleiner 0,3, und/oder kleiner 0,25, und/oder kleiner 0,2 aufweist.

Der Strukturabschnitt des Primärrotorblatts ermöglicht eine besonders gute strukturelle Auslegung des Primärrotorblatts, da vorzugsweise keine aerodynamischen Optimierungen vorgenommen werden. Insbesondere kann der Strukturabschnitt einen geringen Auftriebsbeiwert oder einen Auftriebsbeiwert von null aufweisen. Insbesondere werden bei der Auslegung des Strukturabschnitts im Wesentlichen keine hohen Induktionsfaktoren berücksichtigt. Dies verringert die Kosten des Primärrotorblatts. Insbesondere kann das Primärrotorblatt auch fester gestaltet werden. Der Strukturabschnitt ist insbesondere als ein nabennaher Abschnitt des Primärrotorblatts zu verstehen.

Das Primärrotorblatt mit einem Strukturabschnitt mit geringen Induktionsfaktoren wird einen geringeren Wirkungsgrad aufweisen als ein Primärrotorblatt mit optimiertem Induktionsfaktor im nabennahen Bereich. Dieser nicht optimale Induktionsfaktor des Primärrotorblatts wird jedoch durch das Sekundärrotorblatt aufgefangen. Die Kombination aus Primärrotorblatt mit dem Strukturabschnitt mit geringem Induktionsfaktor und dem Sekundärrotorblatt mit optimiertem Induktionsfaktor resultiert in einem Rotor mit höherem Wirkungsgrad verglichen mit Rotoren, die die bekannten optimierten Rotorblätter aufweisen.

Beliebige Punkte entlang der radialen Erstreckung des Rotors können in Prozent angegeben werden, wobei vorzugsweise 0% den Wurzelbereich und 100% die Blattspitze des Primärrotorblatts repräsentiert.

Das Primärrotorblatt weist vorzugsweise im Bereich zwischen 30 % und 100 % einen Induktionsfaktor von 0,25 bis 0,4, insbesondere von 0,3 bis 0,35, besonders bevorzugt von 1/3, auf. Zwischen 30 % und 0 % kann der Induktionsfaktor sukzessive abnehmen und erreicht bei 0 %, also im Wurzelbereich, einen Wert von im Wesentlichen null. Im Bereich zwischen 20 % und 40 % kann das Primärrotorblatt einen Induktionsfaktor von größer 1/3 aufweisen, sodass hier Überinduktion auftritt. Vorzugsweise weist das Sekundärrotorblatt im einem Bereich in dem das Primärrotorblatt eine Überinduktion aufweist, negative Auftriebsbeiwert auf, um die Überinduktion des Primärrotorblatts zu kompensieren.

Der Strukturabschnitt weist vorzugsweise im Vergleich zu konventionellen Rotorblättern eine höhere relative Dicke und eine geringere Wölbung auf. Hiermit kann bei geringerem Auftrieb eine Ablösung vermieden werden. Der Strukturabschnitt weist in einem Abschnitt angrenzend an den Wurzelbereich eine geometrisch an die Blattwurzel angepasste Geometrie auf. Die Auftriebsbeiwerte des Strukturabschnitts liegen vorzugsweise zwischen CL=0 und CL=3. Insbesondere ist es bevorzugt, dass die Auftriebsbeiwerte im nabennahen Bereich, insbesondere zwischen 0% und 30 %, geringer sind als die von konventionellen Rotorblättern. Die Blatttiefe kann im Vergleich zu konventionellen Rotorblättern unverändert bleiben.

Gemäß einer weiteren bevorzugten Fortbildung des Rotors ist vorgesehen, dass die zweite Längserstreckung größer ist als die Strukturabschnittslänge. Wenn die zweite Längserstreckung größer ist als die Strukturabschnittslänge, überstreicht das Sekundärrotorblatt den Bereich des Rotors, der aufgrund des Primärrotorblatts einen geringen Induktionsfaktor, insbesondere einen nicht optimalen Induktionsfaktor, aufweisen würde. Durch ein induktionsoptimiertes Sekundärrotorblatt kann dieser nabennahe Bereich, nämlich der Strukturabschnitt, induktionsbezogen optimal genutzt werden.

Gemäß der Erfindung ist vorgesehen, dass das Sekundärrotorblatt einen Induktionsfaktor zwischen 0 und 0,4 aufweist, wobei vorzugsweise das Sekundärrotorblatt in einem Bereich angrenzend an die zweite Blattspitze einen Induktionsfaktor von kleiner 0,1, beispielsweise von 0, aufweist und in einem Bereich angrenzend an den zweiten Wurzelbereich einen Induktionsfaktor zwischen 0,25 und 0,4, insbesondere zwischen 0,3 und 0,35, beispielsweise 1/3, aufweist.

Der geringe oder bei null liegende Induktionsfaktor an der zweiten Blattspitze ist bevorzugt deswegen so gewählt, weil das Primärrotorblatt in diesem Radiusbereich in der Regel lediglich ein geringes Induktionsfaktordefizit aufweist, beispielsweise von knapp unter 1/3. Es muss also vom Sekundärrotorblatt lediglich ein geringes Induktionsfaktordefizit ausgeglichen werden, sodass das Sekundärrotorblatt in diesem Bereich einen geringeren Induktionsfaktor aufweisen kann. Je mehr sich der Induktionsfaktor des Primärrotorblatts hin zur Nabe verringert, desto größer wird der Induktionsfaktor des Sekundärrotorblatts, sodass sich die Induktionsfaktoren der zwei Rotorblätter an jeder Stelle des Rotorradius auf 1/3 aufaddieren. Es ist besonders bevorzugt, dass der lokale Induktionsfaktor des Sekundärrotorblatts 1/3 abzüglich des lokalen Induktionsfaktors des Primärrotorblatts beträgt. Beispielsweise beträgt der Induktionsfaktor des Primärrotorblatts 15 Meter von der Nabe entfernt 0,15. Der Induktionsfaktor des Sekundärrotorblatts beträgt dann 15 Meter von der Nabe entfernt vorzugsweise 0,18, was in etwa die Differenz aus 1/3 und 0,15 ist.

Durch ein derartig ausgebildetes Sekundärrotorblatt kann der induktionsoptimale Bereich des Rotors vergrößert werden. Insbesondere im nabennahen Bereich kann der Rotor induktionsoptimiert ausgebildet sein. Beispielsweise kann der Bereich mit nicht optimalen Induktionsfaktor, also kleiner 1/3, um mehr als 50 % verkleinert werden mit dem im Vorherigen beschriebenen Sekundärrotorblatt.

Gemäß einer weiteren bevorzugten Ausführungsvariante des Rotors ist vorgesehen, dass dieser zwei Primärrotorblätter und/oder zwei Sekundärrotorblätter umfasst, wobei die Primärrotorblätter und die Sekundärrotorblätter benachbart zueinander angeordnet sind, und vorzugsweise jeweils einen 90°-Winkel einschließen.

Die zwei Primärrotorblätter sind vorzugsweise gegenüberliegend an einer Nabe angeordnet. Die zwei Sekundärrotorblätter sind vorzugsweise gegenüberliegend an der Nabe angeordnet In dieser bevorzugten Ausführungsvariante des Rotors sind die Längsachsen der zwei Primärrotorblätter vorzugsweise parallel angeordnet. Die Längsachsen der Primärrotorblätter schließen vorzugsweise einen 180°-Winkel miteinander ein. Die Längsachsen der Sekundärrotorblätter schließen vorzugsweise ebenfalls einen 180°-Winkel miteinander ein. Darüber hinaus ist es bevorzugt, dass ein Primärrotorblatt und ein Sekundärrotorblatt einen Winkel von 90° miteinander einschließen. Ein derartiger Rotor ist insbesondere vierflügelig ausgebildet, wobei zwei Rotorblätter lang ausgebildet sind und zwei Rotorblätter kurz ausgebildet sind.

Gemäß einer weiteren bevorzugten Ausführungsvariante ist vorgesehen, dass dieser drei Primärrotorblätter und/oder drei Sekundärrotorblätter umfasst, wobei die Primärrotorblätter und die Sekundärrotorblätter benachbart zueinander angeordnet sind, und vorzugsweise jeweils einen 60°-Winkel einschließen.

Die Primärrotorblätter und die Sekundärrotorblätter sind vorzugsweise derart angeordnet, dass zwischen zwei Primärrotorblättern jeweils ein Sekundärrotorblatt angeordnet ist. Die Längsachsen der benachbarten Primärrotorblätter schließen vorzugsweise jeweils einen 120°-Winkel miteinander ein. Die Längsachsen der benachbarten Sekundärrotorblätter schließen vorzugsweise ebenfalls jeweils einen 120°-Winkel miteinander ein. Darüber hinaus ist es bevorzugt, dass eine Längsachse eines Primärrotorblatt und eine Längsachse eines zum Primärrotorblatt benachbarten Sekundärrotorblatts einen Winkel von 60° miteinander einschließen. Ein derartiger Rotor ist insbesondere sechsflügelig ausgebildet, wobei drei Rotorblätter lang ausgebildet sind und drei Rotorblätter kurz ausgebildet sind.

Der Rotor kann in vorteilhafter Weise dadurch fortgebildet werden, dass am Sekundärrotorblatt mindestens ein Hochauftriebssystem angeordnet ist, wobei das mindestens eine Hochauftriebssystem umfasst oder ausgebildet ist als: Vorflügel, Schlitzkappen, Fowler Klappen, Vortexgeneratoren, und/oder Gurney Flaps.

Gemäß einem weiteren Aspekt wird die eingangs genannte Aufgabe gelöst durch eine Nabe für einen Rotor einer Windenergieanlage, umfassend mindestens drei Primäranschlussstellen zur Kopplung mit Primärrotorblättern und mindestens drei Sekundäranschlussstellen zur Kopplung mit Sekundärrotorblättern, ausgebildet gemäß einer der oben beschriebenen Ausführungsvarianten.

Gemäß einem weiteren Aspekt der vorliegenden Erfindung wird die eingangs genannte Aufgabe gelöst durch eine Windenergieanlage, umfassend einen Turm und eine an dem Turm angeordnete Gondel mit einem Rotor gemäß einer der im Vorherigen beschriebenen Ausführungsvarianten und/oder mit einer Nabe gemäß der im Vorherigen beschriebenen Ausführungsvariante.

Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Rotors verwiesen.

Bevorzugte Ausführungsbeispiele werden exemplarisch anhand der beiliegenden Figuren erläutert. Es zeigen:
- Figur 1:: eine schematische Ansicht einer Windenergieanlage;
- Figur 2:: eine schematische Ansicht einer weiteren Windenergieanlage mit schematisch dargestellten Induktionsfaktoren; und
- Figur 3:: eine schematische Ansicht einer im Stand der Technik bekannten Windenergieanlage mit schematisch dargestellten Induktionsfaktoren.

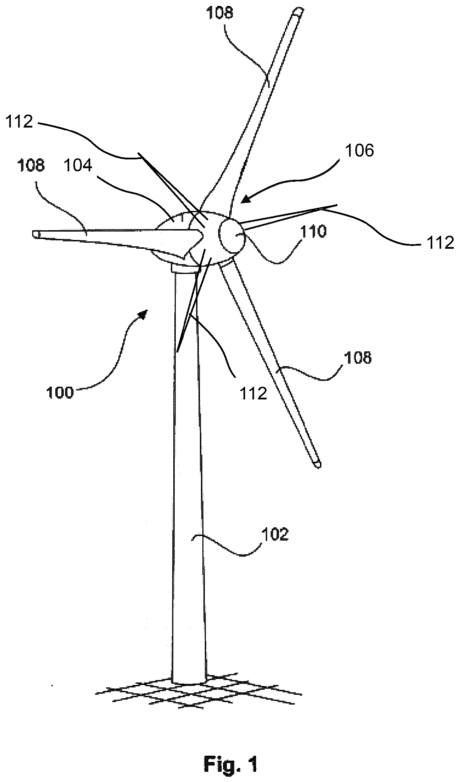

Figur 1 zeigt eine schematische Darstellung einer Windenergieanlage. Die Windenergieanlage 100 weist einen Turm 102 und eine Gondel 104 auf dem Turm 102 auf. An der Gondel 104 ist ein aerodynamischer Rotor 106 mit drei Primärrotorblättern 108 und drei Sekundärrotorblättern 112 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Primärrotorblätter 108 können durch Pitchmotoren an den Rotorblattwurzeln der jeweiligen Primärrotorblätter 108 verändert werden.

Die Primärrotorblätter 108 weisen vorzugsweise in einem Bereich beginnend an der jeweiligen Blattspitze bis hin zu einem Strukturabschnitt einen Induktionsfaktor von ca. 1/3 auf. Im Strukturabschnitt sind die Primärrotorblätter 108 im Wesentlichen zur Erfüllung von strukturellen Anforderungen ausgelegt und können hier einen Induktionsfaktor von deutlich unter 1/3 aufweisen. Die Sekundärrotorblätter 112 weisen eine geringere Längserstreckung auf als die Primärrotorblätter 108. Die Sekundärrotorblätter weisen darüber hinaus jeweils einen Induktionsfaktor von 1/3 angrenzend an den Wurzelbereich und einen Induktionsfaktor von 0 an der Blattspitze auf. Die Summe aus Induktionsfaktor des Primärrotorblatts und des Sekundärrotorblatts summiert sich vorzugsweise für jede Beabstandung von der Nabe auf 1/3 auf. Der Anteil des Rotors 106, in dem der Induktionsfaktor somit unter 1/3, insbesondere deutlich unter 1/3, liegt, ist bei dem vorliegenden Rotor 106 im Vergleich zu bekannten Rotoren verringert.

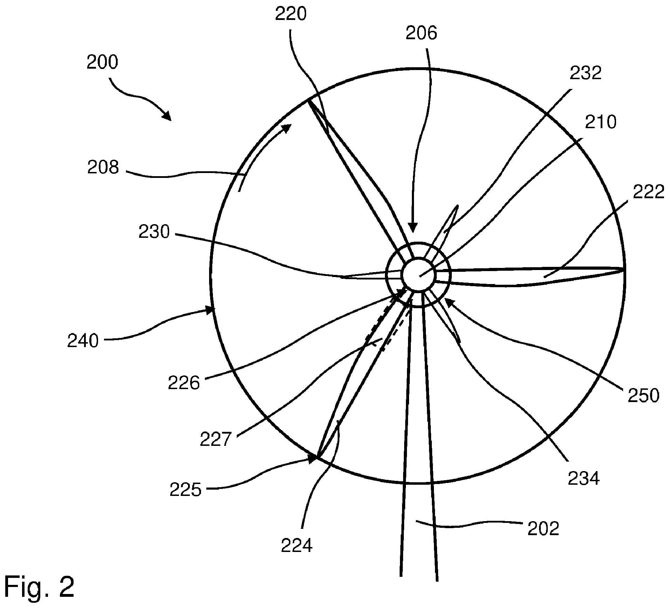

Figur 2 zeigt eine schematische Ansicht einer weiteren Windenergieanlage mit schematisch dargestellten Induktionsfaktoren. Die Windenergieanlage 200 weist einen Turm 202 mit einem Rotor 206 auf. Der Rotor weist im Bereich seiner Drehachse einen Spinner 210 auf. Der Rotor umfasst ein erstes Primärrotorblatt 220, ein zweites Primärrotorblatt 222 und ein drittes Primärrotorblatt 224. Der Rotor 206 dreht um eine Drehachse, sodass sich die Primärrotorblatter 220, 222, 224 in Drehrichtung 208 bewegen.

Der Aufbau eines Primärrotorblatts wird im Folgenden am Beispiel des dritten Primärrotorblatts 224 erläutert. Das dritte Primärrotorblatt 224 erstreckt sich von einer Blattspitze 225 hin zu einem Wurzelbereich 226. Die Blattspitze und der Wurzelbereich sind insbesondere als Enden des dritten Primärrotorblatts 224 zu verstehen.

In einem nabennahen Bereich des dritten Primärrotorblatts 224 weist dieses einen Strukturabschnitt 227 auf, der sich ausgehend vom Wurzelbereich 227 mit einer Strukturabschnittslänge in Richtung der Blattspitze 225 erstreckt und vorliegend gestrichelt dargestellt ist. Der Strukturabschnitt 227 zeichnet sich dadurch aus, dass dieser einen geringen Induktionsfaktor aufweist. Insbesondere kann der Induktionsfaktor des Strukturabschnitts 227 kleiner 0,3 und/oder kleiner 0,25 und/oder kleiner 0,2 sein.

Der in Richtung der Blattspitze 225 an den Strukturabschnitt 227 angrenzende Abschnitt des dritten Primärrotorblatts 224 weist vorzugsweise einen Induktionsfaktor von ca. 1/3 auf. Insbesondere kann der Induktionsfaktor in diesem Bereich zwischen 0,25 und 0,5, insbesondere zwischen 0,25 und 0,35, betragen. In einem Abschnitt angrenzend an die Blattspitze 225 weist das dritte Primärrotorblatt 224 somit einen im Wesentlichen optimalen Induktionsfaktor auf, der einen leistungsoptimalen Betrieb der Windenergieanlage 200 ermöglicht. In einem nabennahen Bereich, insbesondere in einem Radius, der der Strukturabschnittslänge 227 entspricht, sind die Primärrotorblätter 220, 222, 224 jedoch nicht induktionsoptimal ausgelegt.

Der Rotor 206 weist ferner das erste Sekundärrotorblatt 230, das zweite Sekundärrotorblatt 232 und das dritte Sekundärrotorblatt 234 auf. Die Sekundärrotorblätter 230, 232, 234 weisen eine deutlich geringere Längserstreckung auf als die Primärrotorblätter 220, 222, 224. Die Sekundärrotorblätter 230, 232, 234 weisen an der jeweiligen Blattspitze einen Induktionsfaktor von null auf, der dann sukzessive hin zum Wurzelbereich auf einen Wert von 0,25 bis 0,35, insbesondere 1/3, ansteigt.

Die Wurzelbereiche der Sekundärrotoren 230, 232, 234 sind bedingt durch die deutlich kleinere Längserstreckung geringeren Biegemomenten ausgesetzt. Infolgedessen können diese mit einer geringeren relativen Profildicke ausgestaltet werden und somit höhere Gleitleistungen erzielt werden. Daher wandert der Bereich eines nicht optimalen Induktionsfaktors in Richtung der Nabe und der Gesamtbereich eines optimalen Induktionsfaktors wird vergrößert. Dies ist in der Figur 2 schematisch anhand des ersten Induktionsfaktorbereichs 240 und des zweiten Induktionsfaktorbereichs 250 dargestellt. Der erste Induktionsfaktorbereich 240 stellt den Bereich des Rotors bzw. der Rotorblätter dar, in denen ein im Wesentlichen optimaler Induktionsfaktor, insbesondere von 1/3, erreicht wird. Der zweite Induktionsfaktorbereich 250 stellt den Bereich des Rotors 206 bzw. der Rotorblätter dar, in dem von dem optimalen Induktionsfaktor abgewichen wird, insbesondere ist hier der Induktionsfaktor geringer als 1/3.

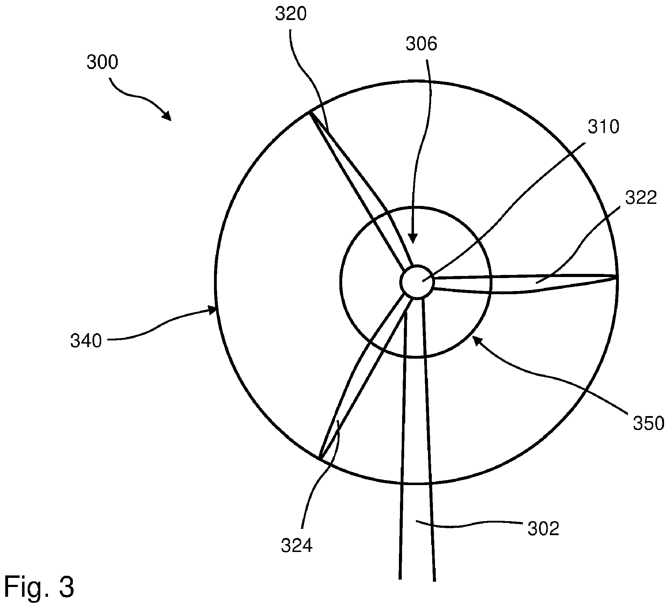

Im Vergleich hierzu ist in der Figur 3 eine konventionelle Windenergieanlage 300 mit einem Turm 302 und einem Rotor 306 gezeigt, wobei der Rotor ein erstes Rotorblatt 320, ein zweites Rotorblatt 322 und ein drittes Rotorblatt 324 aufweist. Der Rotor 306 weist keine Sekundärrotorblätter auf. Es ist erkennbar, dass durch den nabennahen Bereich der Rotorblätter 320, 322, 324 ein deutlich größerer zweiter Induktionsfaktorbereich 350 entsteht, in dem kein optimaler Induktionsfaktor von 1/3 erreicht wird. Dementsprechend kleiner ist der erste Induktionsfaktorbereich 340, in dem ein optimaler Induktionsfaktor erreicht werden kann. Infolgedessen ist die aerodynamische Leistung des Rotors 306 geringer als die aerodynamische Leistung des Rotors 206 aus der in Figur 2 gezeigten Windenergieanlage 200.

### BEZUGSZEICHEN

- 100: Windenergieanlage
- 102: Turm
- 104: Gondel
- 106: Rotor
- 108: Primärrotorblätter
- 110: Spinner
- 112: Sekundärrotorblätter
- 200: Windenergieanlage
- 202: Turm
- 206: Rotor
- 208: Drehrichtung
- 210: Spinner
- 220: erstes Primärrotorblatt
- 222: zweites Primärrotorblatt
- 224: drittes Primärrotorblatt
- 225: Blattspitze
- 226: Wurzelbereich
- 227: Strukturabschnitt
- 230: erstes Sekundärrotorblatt
- 232: zweites Sekundärrotorblatt
- 234: drittes Sekundärrotorblatt
- 240: erster Induktionsfaktorbereich
- 250: zweiter Induktionsfaktorbereich
- 300: Windenergieanlage
- 302: Turm
- 306: Rotor
- 310: Spinner
- 320: erstes Rotorblatt
- 322: zweites Rotorblatt
- 324: drittes Rotorblatt
- 340: erster Induktionsfaktorbereich
- 350: zweiter Induktionsfaktorbereich

## Patentansprüche

1. Rotor (106, 206) für eine Windenergieanlage (100, 200), insbesondere eine Windenergieanlage (100, 200) mit einer Leistung von mehr als 1 MW, umfassend
- ein Primärrotorblatt (108, 220, 222, 224), wobei sich das Primärrotorblatt (108, 220, 222, 224) von einem ersten Wurzelbereich (226) zu einer ersten Blattspitze (225) mit einer ersten Längserstreckung erstreckt,
- ein Sekundärrotorblatt (112, 230, 232, 234), wobei sich das Sekundärrotorblatt (112, 230, 232, 234) von einem zweiten Wurzelbereich zu einer zweiten Blattspitze mit einer zweiten Längserstreckung erstreckt,
- wobei die erste Längserstreckung größer ist als die zweite Längserstreckung,
**dadurch gekennzeichnet, dass** das Sekundärrotorblatt (112, 230, 232, 234) einen Induktionsfaktor zwischen 0 und 0,4 aufweist, und wobei das Sekundärrotorblatt in einem Bereich angrenzend an die zweite Blattspitze einen Induktionsfaktor von kleiner 0,1, beispielsweise von 0, aufweist und in einem Bereich angrenzend an den zweiten Wurzelbereich einen Induktionsfaktor zwischen 0,25 und 0,4, insbesondere zwischen 0,3 und 0,35, beispielsweise 1/3, aufweist.

2. Rotor (106, 206) gemäß Anspruch 1,
wobei das Verhältnis aus zweiter Längserstreckung zu erster Längserstreckung kleiner 0,75, kleiner 0,5, kleiner 0,3, oder kleiner 0,1 beträgt.

3. Rotor (106, 206) gemäß einem der vorherigen Ansprüche,
wobei das Primärrotorblatt (108, 220, 222, 224) eine Pitchverstellung zur rotatorischen Bewegung um eine Längsachse des Primärrotorblatts (108, 220, 222, 224) aufweist, und/oder
wobei das Sekundärrotorblatt (112, 230, 232, 234) eine Pitchverstellung zur rotatorischen Bewegung um eine Längsachse des Sekundärrotorblatts (112, 230, 232, 234) aufweist, und/oder
das Sekundärrotorblatt (112, 230, 232, 234) Stall-geregelt ausgebildet ist.

4. Rotor (106, 206) gemäß einem der vorherigen Ansprüche,
wobei das Primärrotorblatt (108, 220, 222, 224) und das Sekundärrotorblatt (112, 230, 232, 234) an einer Nabe angeordnet sind.

5. Rotor (106, 206) gemäß einem der vorherigen Ansprüche,
wobei das Primärrotorblatt (108, 220, 222, 224) eine zwischen dem ersten Wurzelbereich (226) und der ersten Blattspitze (225) ausgerichtete erste Längsachse, und das Sekundärrotorblatt (112, 230, 232, 234) eine zwischen dem zweiten Wurzelbereich und der zweiten Blattspitze ausgerichtete zweite Längsachse aufweist, und die erste Längsachse und die zweite Längsachse einen Winkel parallel zur Drehrichtung einschließen, und/oder
der Rotor (106, 206) eine Drehachse aufweist und die erste Längsachse und die zweite Längsachse mit der Drehachse im Wesentlichen einen gleich großen Winkel einschließen.

6. Rotor (106, 206) gemäß einem der vorherigen Ansprüche,
wobei das Primärrotorblatt (108, 220, 222, 224) angrenzend an den ersten Wurzelbereich (226) einen Strukturabschnitt (227) umfasst, der sich ausgehend vom ersten Wurzelbereich (226) mit einer Strukturabschnittslänge in Richtung der ersten Blattspitze erstreckt, und der Strukturabschnitt (227) einen Induktionsfaktor von kleiner 0,3, und/oder kleiner 0,25, und/oder kleiner 0,2 aufweist.

7. Rotor (106, 206) gemäß einem der vorherigen Ansprüche,
wobei die zweite Längserstreckung größer ist als die Strukturabschnittslänge.

8. Rotor (106, 206) gemäß einem der vorherigen Ansprüche,
umfassend zwei Primärrotorblätter (108, 220, 222, 224) und/oder zwei Sekundärrotorblätter (112, 230, 232, 234), wobei die Primärrotorblätter (108, 220, 222, 224) und die Sekundärrotorblätter (112, 230, 232, 234) benachbart zueinander angeordnet sind, und vorzugsweise jeweils einen 90°-Winkel einschließen.

9. Rotor (106, 206) gemäß einem der vorherigen Ansprüche,
umfassend drei Primärrotorblätter (108, 220, 222, 224) und/oder drei Sekundärrotorblätter (112, 230, 232, 234), wobei die Primärrotorblätter (108, 220, 222, 224) und die Sekundärrotorblätter (112, 230, 232, 234) benachbart zueinander angeordnet sind, und vorzugsweise jeweils einen 60°-Winkel einschließen.

10. Rotor (106, 206) gemäß einem der vorherigen Ansprüche,
wobei am Sekundärrotorblatt (112, 230, 232, 234) mindestens ein Hochauftriebssystem angeordnet ist, wobei das mindestens eine Hochauftriebssystem umfasst oder ausgebildet ist als:
- Vorflügel,
- Schlitzkappen,
- Fowler Klappen,
- Vortexgeneratoren, und/oder
- Gurney Flaps.

11. Rotor (106, 206) nach einem der vorherigen Ansprüche, umfassend eine Nabe, wobei die Nabe ferner mindestens drei Primäranschlussstellen zur Kopplung mit Primärrotorblättern und mindestens drei Sekundäranschlussstellen zur Kopplung mit Sekundärrotorblättern (112, 230, 232, 234) umfasst.

12. Windenergieanlage (100, 200), umfassend einen Turm (102, 202) und eine an dem Turm (102, 202) angeordnete Gondel (104) mit einem Rotor (106, 206) gemäß einem der vorherigen Ansprüche 1-10 und/oder mit einer Nabe gemäß dem vorherigen Anspruch 11.

## Claims

1. A rotor (106, 206) for a wind turbine (100, 200), in particular a wind turbine (100, 200) with a power output of more than 1 MW, comprising
- a primary rotor blade (108, 220, 222, 224), the primary rotor blade (108, 220, 222, 224) extending with a first longitudinal extent from a first root region (226) to a first blade tip (225),
- a secondary rotor blade (112, 230, 232, 234), the secondary rotor blade (112, 230, 232, 234) extending with a second longitudinal extent from a second root region to a second blade tip,
- the first longitudinal extent being greater than the second longitudinal extent, **characterized by** the secondary rotor blade (112, 230, 232, 234) having an induction factor between 0 and 0.4, the secondary rotor blade having, in a region adjacent to the second blade tip, an induction factor of smaller than 0.1, for example of 0, and, in a region adjoining the second root region, having an induction factor between 0.25 and 0.4, in particular between 0.3 and 0.35, for example 1/3.

2. The rotor (106, 206) as claimed in claim 1,
the ratio of the second longitudinal extent to the first longitudinal extent being smaller than 0.75, smaller than 0.5, smaller than 0.3, or smaller than 0.1.

3. The rotor (106, 206) as claimed in either of the preceding claims,
the primary rotor blade (108, 220, 222, 224) having a pitch adjustment for the rotational movement about a longitudinal axis of the primary rotor blade (108, 220, 222, 224), and/or
the secondary rotor blade (112, 230, 232, 234) having a pitch adjustment for the rotational movement about a longitudinal axis of the secondary rotor blade (112, 230, 232, 234), and/or
the secondary rotor blade (112, 230, 232, 234) being of stall-controlled configuration.

4. The rotor (106, 206) as claimed in one of the preceding claims,
the primary rotor blade (108, 220, 222, 224) and the secondary rotor blade (112, 230, 232, 234) being arranged on a hub.

5. The rotor (106, 206) as claimed in one of the preceding claims,
the primary rotor blade (108, 220, 222, 224) having a first longitudinal axis which is oriented between the first root region (226) and the first blade tip (225), and the secondary rotor blade (112, 230, 232, 234) having a second longitudinal axis which is oriented between the second root region and the second blade tip, and
the first longitudinal axis and the second longitudinal axis enclosing an angle parallel to the rotational direction, and/or
the rotor (106, 206) having a rotational axis, and the first longitudinal axis and the second longitudinal axis enclosing substantially an angle of identical magnitude with the rotational axis.

6. The rotor (106, 206) as claimed in one of the preceding claims,
the primary rotor blade (108, 220, 222, 224) comprising, in a manner which is adjacent to the first root region (226), a structural section (227) which, starting from the first root region (226), extends with a structural section length in the direction of the first blade tip, and the structural section (227) having an induction factor of smaller than 0.3, and/or smaller than 0.25, and/or smaller than 0.2.

7. The rotor (106, 206) as claimed in one of the preceding claims,
the second longitudinal extent being greater than the structural section length.

8. The rotor (106, 206) as claimed in one of the preceding claims,
comprising two primary rotor blades (108, 220, 222, 224) and/or two secondary rotor blades (112, 230, 232, 234), the primary rotor blades (108, 220, 222, 224) and the secondary rotor blades (112, 230, 232, 234) being arranged adjacently with respect to one another, and preferably in each case enclosing a 90° angle.

9. The rotor (106, 206) as claimed in one of the preceding claims,
comprising three primary rotor blades (108, 220, 222, 224) and/or three secondary rotor blades (112, 230, 232, 234), the primary rotor blades (108, 220, 222, 224) and the secondary rotor blades (112, 230, 232, 234) being arranged adjacently with respect to one another, and preferably in each case enclosing a 60° angle.

10. The rotor (106, 206) as claimed in one of the preceding claims,
at least one high lift system being arranged on the secondary rotor blade (112, 230, 232, 234), the at least one high lift system comprising or being configured as:
- slats,
- slotted caps,
- Fowler flaps,
- vortex generators, and/or
- Gurney flaps.

11. A rotor (106, 206) according to one of the preceding claims comprising a hub, wherein the hub comprises at least three primary connector points for coupling to primary rotor blades and at least three secondary connector points for coupling to secondary rotor blades (112, 230, 232, 234).

12. A wind turbine (100, 200), comprising a tower (102, 202) and a nacelle (104) which is arranged on the tower (102, 202) and has a rotor (106, 206) as claimed in one of the preceding claims 1-11.

## Revendications

1. Rotor (106, 206) pour une éolienne (100, 200), en particulier une éolienne (100, 200) avec une puissance supérieure à 1 MW, comprenant
- une pale de rotor primaire (108, 220, 222, 224), dans lequel la pale de rotor primaire (108, 220, 222, 224) s'étend d'une première zone de pied (226) à un premier bout de pale (225) avec une première étendue longitudinale,
- une pale de rotor secondaire (112, 230, 232, 234), dans lequel la pale de rotor secondaire (112, 230, 232, 234) s'étend d'une deuxième zone de pied à un deuxième bout de pale avec une deuxième étendue longitudinale,
- dans lequel la première étendue longitudinale est supérieure à la deuxième étendue longitudinale, **caractérisé en ce que** la pale de rotor secondaire (112, 230, 232, 234) présente un facteur d'induction compris entre 0 et 0,4, et dans lequel la pale de rotor secondaire présente un facteur d'induction inférieur à 0,1, par exemple de 0, dans une zone adjacente au deuxième bout de pale et un facteur d'induction compris entre 0,25 et 0,4, en particulier entre 0,3 et 0,35, par exemple de 1/3, dans une zone adjacente à la deuxième zone de pied.

2. Rotor (106, 206) selon la revendication 1,
dans lequel le rapport entre la deuxième étendue longitudinale et la première étendue longitudinale est inférieur à 0,75, inférieur à 0,5, inférieur à 0,3 ou inférieur à 0,1.

3. Rotor (106, 206) selon l'une quelconque des revendications précédentes,
dans lequel la pale de rotor primaire (108, 220, 222, 224) présente un dispositif de réglage du pas variable pour un mouvement rotatif autour d'un axe longitudinal de la pale de rotor primaire (108, 220, 222, 224), et/ou
dans lequel la pale de rotor secondaire (112, 230, 232, 234) présente un dispositif de réglage du pas variable pour un mouvement rotatif autour d'un axe longitudinal de la pale de rotor secondaire (112, 230, 232, 234), et/ou
la pale de rotor secondaire (112, 230, 232, 234) est réalisée avec régulation du calage.

4. Rotor (106, 206) selon l'une quelconque des revendications précédentes,
dans lequel la pale de rotor primaire (108, 220, 222, 224) et la pale de rotor secondaire (112, 230, 232, 234) sont disposées sur un moyeu.

5. Rotor (106, 206) selon l'une quelconque des revendications précédentes,
dans lequel la pale de rotor primaire (108, 220, 222, 224) présente un premier axe longitudinal aligné entre la première zone de pied (226) et le premier bout de pale (225), et la pale de rotor secondaire (112, 230, 232, 234) un deuxième axe longitudinal aligné entre la deuxième zone de pied et le deuxième bout de pale, et le premier axe longitudinal et le deuxième axe longitudinal enferment un angle parallèle au sens de rotation, et/ou
le rotor (106, 206) présente un axe de rotation et le premier axe longitudinal et le deuxième axe longitudinal enferment avec l'axe de rotation sensiblement un angle égal.

6. Rotor (106, 206) selon l'une quelconque des revendications précédentes,
dans lequel la pale de rotor primaire (108, 220, 222, 224) comprend une section de structure (227) adjacente à la première zone de pied (226), qui s'étend à partir de la première zone de pied (226) avec une longueur de section de structure en direction du premier bout de pale, et la section de structure (227) présente un facteur d'induction inférieur à 0,3, et/ou inférieur à 0,25, et/ou inférieur à 0,2.

7. Rotor (106, 206) selon l'une quelconque des revendications précédentes,
dans lequel la deuxième étendue longitudinale est supérieure à la longueur de section de structure.

8. Rotor (106, 206) selon l'une quelconque des revendications précédentes,
comprenant deux pales de rotor primaires (108, 220, 222, 224) et/ou deux pales de rotor secondaires (112, 230, 232, 234), dans lequel les pales de rotor primaires (108, 220, 222, 224) et les pales de rotor secondaires (112, 230, 232, 234) sont disposées l'une au voisinage de l'autre, et enferment de préférence chacune un angle de 90°.

9. Rotor (106, 206) selon l'une quelconque des revendications précédentes,
comprenant trois pales de rotor primaires (108, 220, 222, 224) et/ou trois pales de rotor secondaires (112, 230, 232, 234), dans lequel les pales de rotor primaires (108, 220, 222, 224) et les pales de rotor secondaires (112, 230, 232, 234) sont disposées l'une au voisinage de l'autre, et enferment de préférence chacune un angle de 60°.

10. Rotor (106, 206) selon l'une quelconque des revendications précédentes,
dans lequel au moins un système hypersustentateur est disposé sur la pale de rotor secondaire (112, 230, 232, 234), dans lequel l'au moins un système hypersustentateur comprend ou est réalisé en tant que :
- bord d'attaque,
- embouts fendus,
- volets Fowler,
- générateurs de vortex, et/ou
- volets Gurney.

11. Rotor (106, 206) selon l'une quelconque des revendications précédentes,
comprenant un moyeu, dans lequel le moyeu comprend en outre au moins trois points de raccordement primaires pour le couplage aux pales de rotor primaires et au moins trois points de raccordement secondaires pour le couplage aux pales de rotor secondaires (112, 230, 232, 234).

12. Éolienne (100, 200), comprenant une tour (102, 202) et une nacelle (104) disposée sur la tour (102, 202) avec un rotor (106, 206) selon l'une quelconque des revendications précédentes 1-10 et/ou avec un moyeu selon la revendication précédente 11.
